# EUROPEAN PATENT APPLICATION

(11) **EP 4 432 545 A1**
(43) Date of publication of application: **18.09.2024**
(21) Application number: 23899091.5
(22) Date of filing: 16.11.2023
(51) Int. Cl.: H02M 7/483

(54) **INVERTER AND CONTROL METHOD THEREFOR**

(30) Priority: 19.12.2022 CN 202211630876
(71) Applicant: Huawei Digital Power Technologies Co., Ltd., Shenzhen, Guangdong 518043 (CN)
(72) Inventor: GAO, Shen, Shenzhen, Guangdong 518043 (CN); LU, Fenglong, Shenzhen, Guangdong 518043 (CN); LIU, Shuai, Shenzhen, Guangdong 518043 (CN); SHI, Lei, Shenzhen, Guangdong 518043 (CN)
(74) Representative: Isarpatent
(86) International application number: PCT/CN2023/131924
(87) International publication number: WO 2024/131392

(57) **Abstract**

This application provides an inverter and a control method thereof. The inverter is used in a power supply system. The inverter includes an inverter circuit, a collection circuit, a balanced circuit, and an inductor. The collection circuit is configured to detect a direct current bus voltage, to obtain end voltage values of a first capacitor and a second capacitor. The balanced circuit is configured to: when an end voltage value of a target capacitor is less than or equal to a first voltage threshold, control on or off of a plurality of switching transistors, to adjust a current for charging the target capacitor through the inductor and reduce a difference between the end voltage values of the target capacitor and a non-target capacitor in the two groups of capacitors. According to this application, when the difference between the end voltage values of the two groups of capacitors in the inverter circuit is large, the balanced circuit may adjust an output current of the inductor to charge the target capacitor. This reduces the difference between the end voltage values of the two groups of capacitors in the inverter circuit, and improves stability and power supply efficiency of the inverter. A structure is simple, and the method is simple with high applicability.

## Description

This application claims priority to Chinese Patent Application No.202211630876.5, filed with the China National Intellectual Property Administration on December 19, 2022 and entitled "INVERTER AND CONTROL METHOD THEREOF", which is incorporated herein by reference in its entirety.

### TECHNICAL FIELD

This application relates to the field of power electronics technologies, and in particular, to an inverter and a control method thereof.

### BACKGROUND

In the field of power electronics technologies, an inverter circuit in an inverter converts direct current energy of a power supply into alternating current energy and provides the alternating current energy to a load. Some three-level inverter circuits (for example, a neutral point clamped (neutral point clamped, NPC) inverter circuit) have advantages such as high safety, high efficiency, less loss, and fewer harmonics, and are thus widely used. A three-level inverter circuit (namely, an inverter circuit) usually includes two groups of capacitors connected in series and a plurality of switching bridge arms. A series connection point between the two groups of capacitors is a neutral point of the inverter circuit, and each switching bridge arm includes a plurality of switching transistors. In an ideal state, in a power supply cycle of the inverter circuit, an amount of charge flowing into the neutral point of the inverter circuit is the same as an amount of charge flowing out of the neutral point. In other words, in the inverter circuit, the two groups of capacitors connected in series have same voltages. However, in actual application, in the inverter circuit, working states of the switching transistors in the switching bridge arm are usually asymmetric (for example, different models of the switching transistors, different loss, asymmetric loads, or influences of factors such as switch deadtime). Consequently, in the power supply cycle, the amount of the charges flowing into the neutral point of the inverter circuit is different from the amount of charge flowing out of the neutral point. In other words, in the inverter circuit, amounts of charged energy (or discharged energy) of the two groups of capacitors connected in series are not equal, resulting in unequal voltages of the two groups of capacitors connected in series in the inverter circuit (in other words, the voltages at the neutral point of the inverter circuit are unbalanced, or positive and negative direct current bus voltages are unbalanced). This distorts output voltages (or output currents) of the inverter circuit and even damages a power component in a system.

During research and practice, the inventor of this application finds that the current technology provides a method in which voltages at a neutral point are balanced by injecting a common-mode component into a switching bridge arm of an inverter circuit. This method of modulating the voltages at the neutral point has poor adaptability, a poor adjustment capability, and poor control effect because a balancing capability of the common-mode component is limited, and output power of the switching bridge arm is reduced.

### SUMMARY

This application provides an inverter and a control method thereof. When a difference between end voltage values of two groups of capacitors in an inverter circuit is large, a balanced circuit may adjust an output current of an inductor to charge a target capacitor. This reduces the difference between the end voltage values of the two groups of capacitors in the inverter circuit, and improves stability and power supply efficiency of the inverter. A structure is simple, and the method is simple with high applicability.

According to a first aspect, this application provides an inverter. The inverter may include an inverter circuit, a collection circuit, a balanced circuit, and an inductor. The inverter circuit may include at least one switching bridge arm, and a first capacitor and a second capacitor connected in series. The balanced circuit may include a plurality of switching transistors. Herein, one end of the inverter circuit may be configured to connect to a power supply through a positive direct current bus and a negative direct current bus, and the other end of the inverter circuit may be configured to connect to a load. The first capacitor and the second capacitor are connected in series and are then connected in parallel to the at least one switching bridge arm between the positive direct current bus and the negative direct current bus. The collection circuit is connected to the positive direct current bus, the negative direct current bus, a series connection point between the first capacitor and the second capacitor, and the balanced circuit. The balanced circuit is connected to the series connection point between the first capacitor and the second capacitor through the inductor. Herein, the collection circuit may detect a direct current bus voltage, to obtain end voltage values of the first capacitor and the second capacitor. Herein, the balanced circuit may be configured to: when an end voltage value of a target capacitor is less than or equal to a first voltage threshold, control on or off of the plurality of switching transistors, to adjust a current for charging the target capacitor through the inductor and reduce a difference between the end voltage values of the target capacitor and a non-target capacitor in the two groups of capacitors. In the first capacitor and the second capacitor, the target capacitor is a capacitor with a smaller end voltage value.

In this application, the power supply may be connected to the inverter circuit through the positive direct current bus and the negative direct current bus, and the inverter circuit may convert direct current energy provided by the power supply into alternating current energy, and provide the alternating current energy for the load. In a power supply procedure, the inverter circuit may separately charge and discharge the capacitors (for example, the first capacitor and the second capacitor) in the inverter circuit by turning on and off different switching transistors, and convert the direct current energy provided by the power supply into the alternating current energy, and transmit the alternating current energy to the load. It may be understood that when output voltages (or output currents) of the inverter are asymmetric (for example, models of the switching transistors are different, losses are different, loads are asymmetric, or impact from factors such as switch deadtime arises), a positive direct current bus voltage and a negative direct current bus voltage of the inverter circuit are unbalanced. In other words, in the inverter circuit, the difference between the end voltage value of the first capacitor and the end voltage value of the second capacitor is large. This distorts the output voltages (or the output currents) of the inverter circuit and even damages a power component in a system.

In this application, the collection circuit may obtain the direct current bus voltage of the inverter circuit (for example, a positive direct current bus voltage and/or a negative direct current bus voltage, and a voltage of the series connection point between the first capacitor and the second capacitor (or referred to as a neutral point of the inverter circuit)), to obtain the end voltage of the target capacitor. Herein, in the first capacitor and the second capacitor, the target capacitor may be a capacitor with a smaller end voltage value. When the end voltage value of the target capacitor is less than or equal to a voltage threshold (for example, the first voltage threshold), it may be considered that the difference between the end voltage value of the first capacitor and the end voltage value of the second capacitor is large. In other words, the positive and negative direct current bus voltages of the inverter circuit are in an unbalanced state. In this case, the balanced circuit needs to charge the capacitor (for example, the target capacitor). Herein, the first voltage threshold may be determined based on a rated end voltage value of a capacitor (the first capacitor or the second capacitor) in the inverter circuit, and may be determined based on a voltage threshold obtained, collected, received, detected, or stored by the inverter (for example, the first voltage threshold may be a voltage value less than a 1/2 bus voltage, where the bus voltage is a voltage difference between the positive direct current bus voltage and the negative direct current bus voltage). This may be specifically set based on an application scenario. It may be understood that the first voltage threshold herein may be one voltage value, may be a plurality of voltage values, or may be a voltage interval including a plurality of voltage values.

It may be understood that the balanced circuit may determine, in a plurality of manners, whether the target capacitor needs to be charged. A manner in which the end voltage of the target capacitor is compared with the first voltage threshold is only one of the manners. The balanced circuit may alternatively determine, in another manner, whether the capacitor of the inverter circuit needs to be charged. For example, when the difference between the end voltage value of the first capacitor and the end voltage value of the second capacitor is greater than or equal to a threshold, or when a voltage difference between the end voltage value of the first capacitor (or the second capacitor) and the 1/2 bus voltage is greater than or equal to a threshold, the balanced circuit may determine that the capacitor of the inverter circuit needs to be charged. This application describes only an example in which the balanced circuit compares the end voltage of the target capacitor with the first voltage threshold to determine whether the capacitor of the inverter circuit needs to be charged. Another comparison method may be set based on a specific application scenario, and shall also fall within the coverage scope of the present invention. Herein, after the balanced circuit determines that the difference between the end voltage value of the first capacitor and the end voltage value of the second capacitor is large (for example, by comparing the end voltage of the target capacitor with the first voltage threshold), or determines that the positive and negative direct current bus voltages of the inverter circuit are in the unbalanced state, the balanced circuit may charge the target capacitor through the inductor, to increase the end voltage value of the target capacitor. Herein, the balanced circuit includes the plurality of switching transistors. The balanced circuit may control on or off of the switching transistors, to adjust the current for charging the target capacitor through the inductor (for example, increasing the current for charging the target capacitor) and further reduce the difference between the end voltage values of the target capacitor and a non-target capacitor in the two groups of capacitors (in other words, reducing the difference between the end voltage values of the first capacitor and the second capacitor). In other words, the positive direct current bus voltage and the negative direct current bus voltage of the inverter circuit are balanced.

According to this application, when it is determined that the difference between the end voltage value of the first capacitor and the end voltage value of the second capacitor is large, the inverter may use the balanced circuit to adjust an output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

According to the first aspect, in a first possible implementation, the balanced circuit may further be configured to: when the end voltage value of the target capacitor is greater than or equal to a second voltage threshold, control the plurality of switching transistors to remain off, to stop charging the target capacitor. Herein, when the end voltage value of the target capacitor is greater than or equal to a voltage threshold (for example, the second voltage threshold), it may be considered that the difference between the end voltage value of the first capacitor and the end voltage value of the second capacitor is small. In other words, the positive and negative direct current bus voltages of the inverter circuit are in a balanced state. In this case, the balanced circuit does not need to charge the capacitor (for example, the target capacitor). Herein, the second voltage threshold may be determined based on a rated end voltage value of a capacitor (the first capacitor or the second capacitor) in the inverter circuit, and may be determined based on a voltage threshold obtained, collected, received, detected, or stored by the inverter (for example, the second voltage threshold may be a voltage value less than a 1/2 bus voltage and greater than or equal to the first voltage threshold). This may be specifically set based on an application scenario. It may be understood that the second voltage threshold herein may be one voltage value, may be a plurality of voltage values, or may be a voltage interval including a plurality of voltage values. Herein, the second voltage threshold may be greater than or equal to the first voltage threshold. When the second voltage threshold is greater than the first voltage threshold, the inverter does not use the balanced circuit to repeatedly start/stop charging the target capacitor when the end voltage of the target capacitor is not stably greater than the first voltage threshold. In other words, when the second voltage threshold is greater than the first voltage threshold, after the end voltage of the target capacitor is stable (for example, being stably greater than the first voltage threshold), the inverter may determine that the difference between the end voltage value of the first capacitor and the end voltage value of the second capacitor is small, or determine that the positive direct current bus voltage and the negative direct current bus voltage of the inverter circuit are in the balanced state, and then stop using the balanced circuit to charge the target capacitor.

It may be understood that the balanced circuit may determine, in a plurality of manners, whether to stop charging the target capacitor. A manner in which the end voltage of the target capacitor is compared with the second voltage threshold is only one of the manners. The balanced circuit may alternatively determine, in another manner, whether to stop charging the capacitor of the inverter circuit. For example, when the difference between the end voltage value of the first capacitor and the end voltage value of the second capacitor is less than or equal to a threshold, or when a voltage difference between the end voltage value of the first capacitor (or the second capacitor) and the 1/2 bus voltage is less than or equal to a threshold, the balanced circuit may determine that the capacitor of the inverter circuit does not need to be charged. This application describes only an example in which the balanced circuit compares the end voltage of the target capacitor with the second voltage threshold to determine whether to stop charging the capacitor of the inverter circuit. Another comparison method may be set based on a specific application scenario, and shall also fall within the coverage scope of the present invention. Herein, after the balanced circuit determines that the difference between the end voltage value of the first capacitor and the end voltage value of the second capacitor is small (for example, by comparing the end voltage of the target capacitor with the second voltage threshold), or determines that the positive and negative direct current bus voltages of the inverter circuit are in the balanced state, the balanced circuit may stop charging the target capacitor, to increase the end voltage value of the target capacitor. Herein, the balanced circuit may control the switching transistors in the balanced circuit to remain off, to stop charging the target capacitor. This saves electric energy and reduces costs.

According to this application, when it is determined that the difference between the end voltage value of the first capacitor and the end voltage value of the second capacitor is small, the inverter may stop using the balanced circuit to charge the target capacitor. This reduces electric energy consumed by the balanced circuit, reduces costs, and improves the stability and power supply efficiency of the inverter. The structure is simple, and the method is simple with high applicability.

According to the first aspect or the first possible implementation of the first aspect, in a second possible implementation, the balanced circuit may include a control circuit and at least one balanced bridge arm. One balanced bridge arm may include two switching transistors connected in series. The control circuit is connected to the inductor through the at least one balanced bridge arm. The collection circuit is connected to the control circuit. Herein, the collection circuit may further obtain a half bus voltage value based on the direct current bus voltage. Herein, the control circuit may generate balanced modulation signals based on the end voltage value of the target capacitor and the half bus voltage value, and control on or off of the switching transistors in the at least one balanced bridge arm based on the balanced modulation signals, to adjust an output current of the inductor.

In this application, the balanced circuit includes the at least one balanced bridge arm. For example, the balanced circuit may include a half-bridge circuit in which two switching transistors connected in series are used as one balanced bridge arm, or may include a full-bridge circuit in which four switching transistors are used as two balanced bridge arms. Herein, the collection circuit may obtain the positive direct current bus voltage and the negative direct current bus voltage that are of the inverter circuit, and obtain the half bus voltage value (that is, the 1/2 bus voltage value) based on the positive direct current bus voltage and the negative direct current bus voltage. Herein, the control circuit (for example, a voltage regulation loop (for example, a proportional-integral regulation circuit) and a drive control circuit, or another circuit with a voltage regulation function and a drive control function) may generate the balanced modulation signals based on the end voltage value of the target capacitor and the half bus voltage value, and control on or off of the switching transistors in the balanced circuit. For example, the control circuit may generate signals such as pulse width modulation (pulse width modulation, PWM) waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use discontinuous pulse width modulation (discontinuous pulse width modulation, DPWM) waves as the balanced modulation signals, or may use other PWM waves (for example, sinusoidal pulse width modulation (sinusoidal pulse width modulation, SPWM) waves, third harmonic injection pulse width modulation (third harmonic injection pulse width modulation, THIPWM) waves, or carrier-based space vector pulse width modulation (carrier-based space vector pulse width modulation, CBPWM) waves) as the balanced modulation signals, or may alternatively use the driving pulse signals generated based on these PWM waves as the balanced modulation signals. This is applicable to a wide range of scenarios and has good control effect.

According to the second possible implementation of the first aspect, in a third possible implementation, the collection circuit may further be configured to obtain an output current value of the series connection point between the first capacitor and the second capacitor and an input current value of the series connection point between the first capacitor and the second capacitor. Herein, the control circuit may further generate a voltage regulation instruction based on the end voltage value of the target capacitor and the half bus voltage value; generate the balanced modulation signals based on the voltage regulation instruction, the output current value of the series connection point between the first capacitor and the second capacitor, and the input current value of the series connection point between the first capacitor and the second capacitor; and control on or off of the switching transistors in the at least one balanced bridge arm based on the balanced modulation signals, to adjust the output current of the inductor.

According to this application, the collection circuit may obtain the output current value of the series connection point between the first capacitor and the second capacitor (or referred to as the neutral point of the inverter circuit) and the input current value of the series connection point between the first capacitor and the second capacitor (or referred to as the neutral point of the inverter circuit). Herein, the output current value of the series connection point between the first capacitor and the second capacitor may be determined by adding values of currents output from the series connection point between the first capacitor and the second capacitor to switching bridge arms of the inverter circuit, or may be determined in another manner. Herein, the input current value of the series connection point between the first capacitor and the second capacitor may be determined based on an output current of the inductor connected to the series connection point between the first capacitor and the second capacitor, or may be determined in another manner. Herein, reference directions of the output current and the input current of the series connection point between the first capacitor and the second capacitor (or referred to as the neutral point of the inverter circuit) may be determined based on the target capacitor. For example, a direction from the target capacitor to the series connection point between the first capacitor and the second capacitor is a forward direction of the output current of the series connection point between the first capacitor and the second capacitor. A direction from the series connection point between the first capacitor and the second capacitor to the target capacitor is a forward direction of the input current of the series connection point between the first capacitor and the second capacitor. Herein, the control circuit (for example, a voltage regulation loop or another circuit with a voltage regulation function) may generate the voltage regulation instruction based on the end voltage value of the target capacitor and the half bus voltage value. Further, the control circuit (for example, a current regulation loop and a drive control circuit, or another circuit with a current regulation function and a drive control function) may generate the balanced modulation signals (for example, balanced modulation signals such as PWM waves) based on the voltage regulation instruction, the output current value of the series connection point between the first capacitor and the second capacitor, and the input current value of the series connection point between the first capacitor and the second capacitor, and control on or off of the switching transistors in the at least one balanced bridge arm based on the balanced modulation signals, to adjust the output current of the inductor. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals. This is applicable to a wide range of scenarios and has good control effect.

According to the first aspect or any possible implementation of the first aspect, in a fourth possible implementation, the balanced circuit may further include the control circuit and the at least one balanced bridge arm. One balanced bridge arm may include the two switching transistors connected in series. The control circuit is connected to the inductor through the at least one balanced bridge arm. The collection circuit is connected to the control circuit. Herein, the collection circuit may further obtain the half bus voltage value based on the direct current bus voltage, and obtain the output current value of the series connection point between the first capacitor and the second capacitor and the input current value of the series connection point between the first capacitor and the second capacitor. Herein, the control circuit may further generate the balanced modulation signals based on the end voltage value of the target capacitor, the half bus voltage value, the output current value of the series connection point between the first capacitor and the second capacitor, and the input current value of the series connection point between the first capacitor and the second capacitor, and control on or off of the switching transistors in the at least one balanced bridge arm based on the balanced modulation signals, to adjust the output current of the inductor. Herein, the control circuit (for example, a predictive control circuit and a drive control circuit, or another circuit with a predictive control function and a drive control function) may generate the balanced modulation signals based on the end voltage value of the target capacitor, the half bus voltage value, the output current value of the series connection point between the first capacitor and the second capacitor, and the input current value of the series connection point between the first capacitor and the second capacitor. Further, the control circuit (for example, a current regulation loop and a drive control circuit, or another circuit with a current regulation function and a drive control function) may generate the balanced modulation signals based on the half bus voltage value, the output current value of the series connection point between the first capacitor and the second capacitor, and the input current value of the series connection point between the first capacitor and the second capacitor, and control on or off of the switching transistors in the balanced circuit. For example, the control circuit may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

According to the fourth possible implementation of the first aspect, in a fifth possible implementation, the inverter may further include a filter circuit, and the filter circuit is connected to the switching bridge arm in the inverter circuit and the load. Herein, the filter circuit may be an LC filter circuit or an LCL filter circuit that includes an inductor and a capacitor, or another circuit having a filter function. Herein, the filter circuit may filter out a clutter component (for example, a high-frequency component with high frequency) included in the output current (or the output voltage) of the inverter circuit, to improve power supply stability.

According to a second aspect, this application provides a power supply system. The power supply system may include a power supply and an inverter. The inverter may include an inverter circuit, a collection circuit, a balanced circuit, and an inductor. The inverter circuit may include at least one switching bridge arm, and a first capacitor and a second capacitor connected in series. The balanced circuit may include a plurality of switching transistors. Herein, one end of the inverter circuit may be configured to connect to the power supply through a positive direct current bus and a negative direct current bus, and the other end of the inverter circuit may be configured to connect to the load. The two groups of capacitors in the inverter circuit are connected in series and are then connected in parallel to the at least one switching bridge arm between the positive direct current bus and the negative direct current bus. The collection circuit is connected to the positive direct current bus, the negative direct current bus, and a series connection point between the first capacitor and the second capacitor that are in the inverter circuit, and the balanced circuit. The balanced circuit is connected to the series connection point between the first capacitor and the second capacitor through the inductor.

According to this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

According to the second aspect, in a first possible implementation, the power supply system may further include a combiner box. The power supply is connected to the inverter through the combiner box.

According to the first possible implementation of the second aspect, in a second possible implementation, the power supply system may further include direct current buses. The power supply is connected to the direct current buses through the combiner box, and the direct current buses are connected to the inverter.

According to the second possible implementation of the second aspect, in a third possible implementation, the load is a power grid. The power supply system may further include an on/off-grid wiring apparatus, and the inverter is connected to the power grid by using the on/off-grid wiring apparatus.

In this application, the functional modules in the power supply system have various and flexible composition manners. This may adapt to different power supply environments, to improve diversity of application scenarios of the power supply system and enhance adaptability of the power supply system.

According to a third aspect, this application provides an inverter control method. The control method is applied to an inverter. The inverter may include an inverter circuit, a collection circuit, a balanced circuit, and an inductor. The inverter circuit may include at least one switching bridge arm, and a first capacitor and a second capacitor connected in series. The balanced circuit may include a plurality of switching transistors. Herein, one end of the inverter circuit may be configured to connect to a power supply through a positive direct current bus and a negative direct current bus, and the other end of the inverter circuit may be configured to connect to a load. The first capacitor and the second capacitor are connected in series and are then connected in parallel to the at least one switching bridge arm between the positive direct current bus and the negative direct current bus. The collection circuit is connected to the positive direct current bus, the negative direct current bus, a series connection point between the first capacitor and the second capacitor, and the balanced circuit. The balanced circuit is connected to the series connection point between the first capacitor and the second capacitor through the inductor. The method may include:
detecting a direct current bus voltage, to obtain end voltage values of the first capacitor and the second capacitor; and when an end voltage value of a target capacitor is less than or equal to a first voltage threshold, controlling on or off of the plurality of switching transistors, to adjust a current for charging the target capacitor through the inductor and reduce a difference between the end voltage values of the target capacitor and a non-target capacitor in the two groups of capacitors. In the first capacitor and the second capacitor, the target capacitor is a capacitor with a smaller end voltage value.

In this application, the collection circuit may obtain the direct current bus voltage of the inverter circuit (for example, a positive direct current bus voltage and/or a negative direct current bus voltage, and a voltage of a series connection point between the first capacitor and the second capacitor (or referred to as a neutral point of the inverter circuit)), to obtain the end voltage of the target capacitor. Herein, in the first capacitor and the second capacitor, the target capacitor may be a capacitor with a smaller end voltage value. When the end voltage value of the target capacitor is less than or equal to a voltage threshold (for example, the first voltage threshold), it may be considered that the difference between the end voltage value of the first capacitor and the end voltage value of the second capacitor is large. In other words, the positive and negative direct current bus voltages of the inverter circuit are in an unbalanced state. In this case, the balanced circuit needs to charge the capacitor (for example, the target capacitor). Herein, the first voltage threshold may be determined based on a rated end voltage value of a capacitor (the first capacitor or the second capacitor) in the inverter circuit, and may be determined based on a voltage threshold obtained, collected, received, detected, or stored by the inverter (for example, the first voltage threshold may be a voltage value less than a 1/2 bus voltage, where the bus voltage is a voltage difference between the positive direct current bus voltage and the negative direct current bus voltage). This may be specifically set based on an application scenario. It may be understood that the first voltage threshold herein may be one voltage value, may be a plurality of voltage values, or may be a voltage interval including a plurality of voltage values.

It may be understood that the balanced circuit may determine, in a plurality of manners, whether the target capacitor needs to be charged. A manner in which the end voltage of the target capacitor is compared with the first voltage threshold is only one of the manners. The balanced circuit may alternatively determine, in another manner, whether the capacitor of the inverter circuit needs to be charged. For example, when the difference between the end voltage value of the first capacitor and the end voltage value of the second capacitor is greater than or equal to a threshold, or when a voltage difference between the end voltage value of the first capacitor (or the second capacitor) and the 1/2 bus voltage is greater than or equal to a threshold, the balanced circuit may determine that the capacitor of the inverter circuit needs to be charged. This application describes only an example in which the balanced circuit compares the end voltage of the target capacitor with the first voltage threshold to determine whether the capacitor of the inverter circuit needs to be charged. Another comparison method may be set based on a specific application scenario, and shall also fall within the coverage scope of the present invention. Herein, after the balanced circuit determines that the difference between the end voltage value of the first capacitor and the end voltage value of the second capacitor is large (for example, by comparing the end voltage of the target capacitor with the first voltage threshold), or determines that the positive and negative direct current bus voltages of the inverter circuit are in the unbalanced state, the balanced circuit may charge the target capacitor through the inductor, to increase the end voltage value of the target capacitor. Herein, the balanced circuit includes the plurality of switching transistors. The balanced circuit may control on or off of the switching transistors, to adjust the current for charging the target capacitor through the inductor (for example, increasing the current for charging the target capacitor) and further reduce the difference between the end voltage values of the target capacitor and a non-target capacitor in the two groups of capacitors (in other words, reducing the difference between the end voltage values of the first capacitor and the second capacitor). In other words, the positive direct current bus voltage and the negative direct current bus voltage of the inverter circuit are balanced.

According to this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

According to the third aspect, in a first possible implementation, after the detecting a direct current bus voltage, to obtain end voltage values of the first capacitor and the second capacitor, the method may further include:
when the end voltage value of the target capacitor is greater than or equal to a second voltage threshold, controlling the plurality of switching transistors to remain off, to stop charging the target capacitor, where the second voltage threshold is greater than or equal to the first voltage threshold.

Herein, when the end voltage value of the target capacitor is greater than or equal to a voltage threshold (for example, the second voltage threshold), it may be considered that the difference between the end voltage value of the first capacitor and the end voltage value of the second capacitor is small. In other words, the positive and negative direct current bus voltages of the inverter circuit are in a balanced state. In this case, the balanced circuit does not need to charge the capacitor (for example, the target capacitor). Herein, the second voltage threshold may be determined based on a rated end voltage value of a capacitor (the first capacitor or the second capacitor) in the inverter circuit, and may be determined based on a voltage threshold obtained, collected, received, detected, or stored by the inverter (for example, the second voltage threshold may be a voltage value less than a 1/2 bus voltage and greater than or equal to the first voltage threshold). This may be specifically set based on an application scenario. It may be understood that the second voltage threshold herein may be one voltage value, may be a plurality of voltage values, or may be a voltage interval including a plurality of voltage values. Herein, the second voltage threshold may be greater than or equal to the first voltage threshold. When the second voltage threshold is greater than the first voltage threshold, the inverter does not use the balanced circuit to repeatedly start/stop charging the target capacitor when the end voltage of the target capacitor is not stably greater than the first voltage threshold. In other words, when the second voltage threshold is greater than the first voltage threshold, after the end voltage of the target capacitor is stable (for example, being stably greater than the first voltage threshold), the inverter may determine that the difference between the end voltage value of the first capacitor and the end voltage value of the second capacitor is small, or determine that the positive direct current bus voltage and the negative direct current bus voltage of the inverter circuit are in the balanced state, and then stop using the balanced circuit to charge the target capacitor.

It may be understood that the balanced circuit may determine, in a plurality of manners, whether to stop charging the target capacitor. A manner in which the end voltage of the target capacitor is compared with the second voltage threshold is only one of the manners. The balanced circuit may alternatively determine, in another manner, whether to stop charging the capacitor of the inverter circuit. For example, when the difference between the end voltage value of the first capacitor and the end voltage value of the second capacitor is less than or equal to a threshold, or when a voltage difference between the end voltage value of the first capacitor (or the second capacitor) and the 1/2 bus voltage is less than or equal to a threshold, the balanced circuit may determine that the capacitor of the inverter circuit does not need to be charged. This application describes only an example in which the balanced circuit compares the end voltage of the target capacitor with the second voltage threshold to determine whether to stop charging the capacitor of the inverter circuit. Another comparison method may be set based on a specific application scenario, and shall also fall within the coverage scope of the present invention. Herein, after the balanced circuit determines that the difference between the end voltage value of the first capacitor and the end voltage value of the second capacitor is small (for example, by comparing the end voltage of the target capacitor with the second voltage threshold), or determines that the positive and negative direct current bus voltages of the inverter circuit are in the balanced state, the balanced circuit may stop charging the target capacitor, to increase the end voltage value of the target capacitor. Herein, the balanced circuit may control the switching transistors in the balanced circuit to remain off, to stop charging the target capacitor. This saves electric energy and reduces costs.

According to this application, when it is determined that the difference between the end voltage value of the first capacitor and the end voltage value of the second capacitor is small, the inverter may stop using the balanced circuit to charge the target capacitor. This reduces electric energy consumed by the balanced circuit, reduces costs, and improves the stability and power supply efficiency of the inverter. The structure is simple, and the method is simple with high applicability.

According to the third aspect or the first possible implementation of the third aspect, in a second possible implementation, the balanced circuit may include a control circuit and at least one balanced bridge arm. One balanced bridge arm may include two switching transistors connected in series. The control circuit is connected to the inductor through the at least one balanced bridge arm. The collection circuit is connected to the control circuit. After the detecting a direct current bus voltage, to obtain end voltage values of the first capacitor and the second capacitor, the method may further include:
obtaining a half bus voltage value based on the direct current bus voltage; and generating balanced modulation signals based on the end voltage value of the target capacitor and the half bus voltage value, and controlling on or off of the switching transistors in the at least one balanced bridge arm based on the balanced modulation signals, to adjust an output current of the inductor.

According to this application, the balanced circuit includes the at least one balanced bridge arm. For example, the balanced circuit may include a half-bridge circuit in which two switching transistors connected in series are used as one balanced bridge arm, or may include a full-bridge circuit in which four switching transistors are used as two balanced bridge arms. Herein, the collection circuit may obtain the positive direct current bus voltage and the negative direct current bus voltage that are of the inverter circuit, and obtain the half bus voltage value (that is, the 1/2 bus voltage value) based on the positive direct current bus voltage and the negative direct current bus voltage. Herein, the control circuit (for example, a voltage regulation loop (for example, a proportional-integral regulation circuit) and a drive control circuit, or another circuit with a voltage regulation function and a drive control function) may generate the balanced modulation signals based on the end voltage value of the target capacitor and the half bus voltage value, and control on or off of the switching transistors in the balanced circuit. For example, the control circuit may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

According to the second possible implementation of the third aspect, in a third possible implementation, after the obtaining a half bus voltage value based on the direct current bus voltage, the method may further include:
obtaining an output current value of the series connection point between the first capacitor and the second capacitor and an input current value of the series connection point between the first capacitor and the second capacitor; and generating a voltage regulation instruction based on the end voltage value of the target capacitor and the half bus voltage value; generating the balanced modulation signals based on the voltage regulation instruction, the output current value of the series connection point between the first capacitor and the second capacitor, and the input current value of the series connection point between the first capacitor and the second capacitor; and controlling on or off of the switching transistors in the at least one balanced bridge arm based on the balanced modulation signals, to adjust the output current of the inductor.

According to this application, the collection circuit may obtain the output current value of the series connection point between the first capacitor and the second capacitor (or referred to as the neutral point of the inverter circuit) and the input current value of the series connection point between the first capacitor and the second capacitor (or referred to as the neutral point of the inverter circuit). Herein, the output current value of the series connection point between the first capacitor and the second capacitor may be determined by adding values of currents output from the series connection point between the first capacitor and the second capacitor to switching bridge arms of the inverter circuit, or may be determined in another manner. Herein, the input current value of the series connection point between the first capacitor and the second capacitor may be determined based on an output current of the inductor connected to the series connection point between the first capacitor and the second capacitor, or may be determined in another manner. Herein, reference directions of the output current and the input current of the series connection point between the first capacitor and the second capacitor (or referred to as the neutral point of the inverter circuit) may be determined based on the target capacitor. For example, a direction from the target capacitor to the series connection point between the first capacitor and the second capacitor is a forward direction of the output current of the series connection point between the first capacitor and the second capacitor. A direction from the series connection point between the first capacitor and the second capacitor to the target capacitor is a forward direction of the input current of the series connection point between the first capacitor and the second capacitor. Herein, the control circuit (for example, a voltage regulation loop or another circuit with a voltage regulation function) may generate the voltage regulation instruction based on the end voltage value of the target capacitor and the half bus voltage value. Further, the control circuit (for example, a current regulation loop and a drive control circuit, or another circuit with a current regulation function and a drive control function) may generate the balanced modulation signals (for example, balanced modulation signals such as PWM waves) based on the voltage regulation instruction, the output current value of the series connection point between the first capacitor and the second capacitor, and the input current value of the series connection point between the first capacitor and the second capacitor, and control on or off of the switching transistors in the at least one balanced bridge arm based on the balanced modulation signals, to adjust the output current of the inductor. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals. This is applicable to a wide range of scenarios and has good control effect.

According to the third aspect or any possible implementation of the third aspect, in a fourth possible implementation, the balanced circuit may further include the control circuit and the at least one balanced bridge arm. One balanced bridge arm may include the two switching transistors connected in series. The control circuit is connected to the inductor through the at least one balanced bridge arm. The collection circuit is connected to the control circuit. After the detecting a direct current bus voltage, to obtain end voltage values of the first capacitor and the second capacitor, the method may further include:
obtaining the half bus voltage value based on the direct current bus voltage, and obtaining the output current value of the series connection point between the first capacitor and the second capacitor and the input current value of the series connection point between the first capacitor and the second capacitor; and generating the balanced modulation signals based on the end voltage value of the target capacitor, the half bus voltage value, the output current value of the series connection point between the first capacitor and the second capacitor, and the input current value of the series connection point between the first capacitor and the second capacitor, and controlling on or off of the switching transistors in the at least one balanced bridge arm based on the balanced modulation signals, to adjust the output current of the inductor.

Herein, the control circuit (for example, a predictive control circuit and a drive control circuit, or another circuit with a predictive control function and a drive control function) may generate the balanced modulation signals based on the end voltage value of the target capacitor, the half bus voltage value, the output current value of the series connection point between the first capacitor and the second capacitor, and the input current value of the series connection point between the first capacitor and the second capacitor. Further, the control circuit (for example, a current regulation loop and a drive control circuit, or another circuit with a current regulation function and a drive control function) may generate the balanced modulation signals based on the half bus voltage value, the output current value of the series connection point between the first capacitor and the second capacitor, and the input current value of the series connection point between the first capacitor and the second capacitor, and control on or off of the switching transistors in the balanced circuit. For example, the control circuit may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

### BRIEF DESCRIPTION OF DRAWINGS

FIG. 1 is a schematic diagram of an application scenario of an inverter according to an embodiment of this application;
FIG. 2 is a schematic diagram of a structure of an inverter according to an embodiment of this application;
FIG. 3 is a schematic diagram of another structure of an inverter according to an embodiment of this application;
FIG. 4 is a schematic diagram of another structure of an inverter according to an embodiment of this application;
FIG. 5 is a schematic diagram of another structure of an inverter according to an embodiment of this application;
FIG. 6 is a schematic diagram of another structure of an inverter according to an embodiment of this application;
FIG. 7 is a schematic diagram of a structure of a power supply system according to an embodiment of this application;
FIG. 8 is a schematic flowchart of a control method according to an embodiment of this application; and
FIG. 9 is another schematic flowchart of a control method according to an embodiment of this application.

### DESCRIPTION OF EMBODIMENTS

In the field of power electronics technologies, an inverter circuit in an inverter is usually used to convert direct current energy into alternating current energy, so that the alternating current energy is transmitted between a power supply and a load. Some three-level inverter circuits (for example, an NPC inverter circuit and an expander circuit thereof) have advantages such as high safety, high efficiency, less loss, and fewer harmonics, and are thus widely used. A three-level inverter circuit usually includes two groups of capacitors connected in series and a plurality of switching bridge arms. A series connection point between the two groups of capacitors is a neutral point n of the inverter circuit, and each switching bridge arm includes four switching transistors and two clamp diodes. In a working state, the inverter circuit may separately charge and discharge the capacitors in the inverter circuit by turning on and off different switching transistors, and convert the direct current energy provided by the power supply into the alternating current energy, and transmit the alternating current energy to the load. It may be understood that when output voltages (or output currents) of the inverter are asymmetric (for example, different models of the switching transistors, different loss, asymmetric loads, or influences of factors such as switch deadtime), this results in unbalanced positive direct current bus voltage and negative direct current bus voltage of the inverter circuit. In other words, in the inverter circuit, a difference between end voltage values of the two groups of capacitors is large. This distorts the output voltages (or the output currents) of the inverter circuit and even damages a power component in a system. Therefore, when the inverter circuit works, the difference between the end voltage values of the two groups of capacitors in the inverter circuit needs to be controlled (for example, a capacitor in the inverter circuit is charged), so that the positive direct current bus voltage and the negative direct current bus voltage of the inverter circuit keep balanced.

This application provides an inverter and a control method thereof. When a difference between end voltage values of two groups of capacitors in an inverter circuit is large, a balanced circuit may adjust an output current of an inductor to charge a target capacitor. This reduces the difference between the end voltage values of the two groups of capacitors in the inverter circuit, and improves stability and power supply efficiency of the inverter. A structure is simple, and the method is simple with high applicability.

The inverter provided in this application is used in a plurality of application fields such as a field of power generation using renewable energy, a field of peak shaving and frequency modulation in conventional power generation, a field of supplying power to an important device, and a new energy vehicle field. This may be specifically determined based on an actual application scenario, and is not limited herein. The inverter provided in this application is used in different power supply systems such as an energy storage system, an uninterruptible power supply system, and a motor drive system. This may be specifically determined based on an actual application scenario, and is not limited herein. The inverter provided in this application may adapt to different application scenarios, for example, an application scenario in which an inverter circuit is controlled in a solar energy power supply environment, an application scenario in which an inverter circuit is controlled in a wind energy power supply environment, an application scenario in which an inverter circuit is controlled in a pure energy storage power supply environment, or another application scenario. The following uses the application scenario in which an inverter circuit is controlled in a pure energy storage power supply environment as an example for description. Details are not described below.

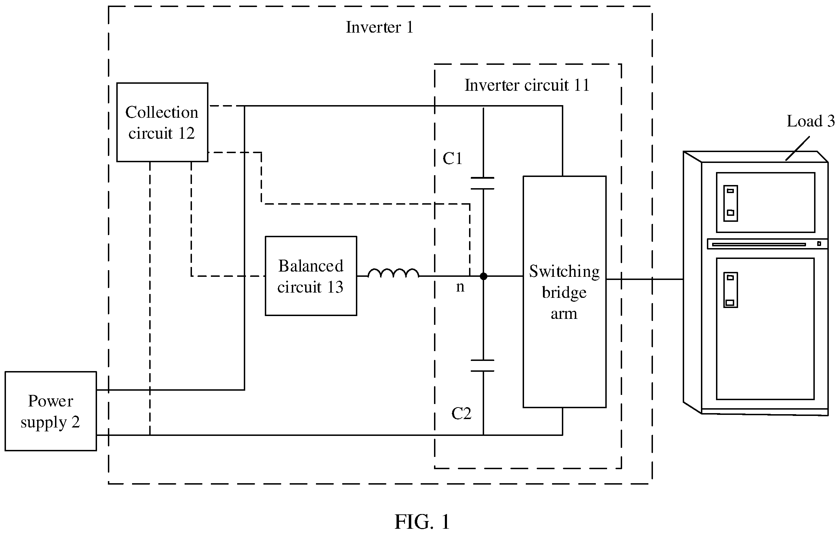

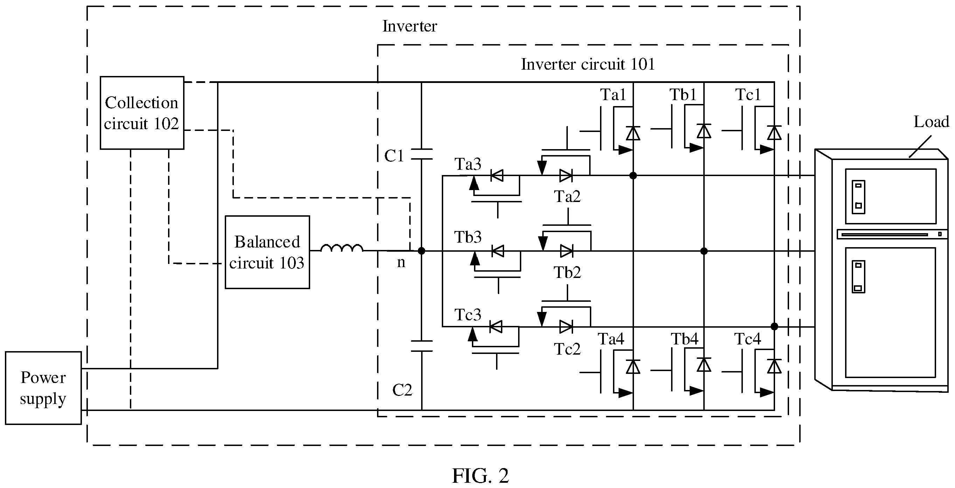

FIG. 1 is a schematic diagram of an application scenario of an inverter according to an embodiment of this application. In a power supply system powered by pure energy storage, as shown in FIG. 1, the power supply system includes an inverter 1, a power supply 2, and a load 3. The inverter 1 includes an inverter circuit 11. The power supply 2 may be connected to the load 3 through the inverter circuit 11. In some feasible implementations, the power supply 2 may supply power to the load 3 through the inverter circuit 11. It may be understood that, the power supply 2 provided in this application is used in application scenarios in which power is supplied to a plurality of types of electric devices, for example, power is supplied to base station equipment in a remote area with no mains or poor mains, or power is supplied to household devices (such as a refrigerator or an air conditioner). This may be specifically determined based on an actual application scenario, and is not limited herein. Further, it may be understood that the load 3 in FIG. 2 may include a power grid. Herein, the power grid may include an electric device or a power transmission device, for example, a transmission line, a power transfer station, a communication base station, or a household device. Herein, the load 3 may further include a load (an electric apparatus or a power transmission apparatus) in which voltage and current are in a non-linear relationship when a motor or a rectifier device is running (supplying power or consuming electricity). In some feasible implementations, the inverter circuit 11 may be a three-level inverter circuit (for example, an NPC inverter circuit). The inverter circuit 11 may include two groups of capacitors (for example, a first capacitor C1 and a second capacitor C2) and at least one switching bridge arm. Herein, a group of capacitors may be one capacitor, or may be a capacitor formed by integrating a plurality of capacitors. In a power supply procedure, the inverter circuit 11 may separately charge and discharge the two groups of capacitors by turning on and off different switching transistors in the switching bridge arm, and convert direct current energy provided by the power supply into alternating current energy, and transmit the alternating current energy to the load. It may be understood that when output voltages (or output currents) of the inverter 1 are asymmetric (for example, different models of the switching transistors, different loss, asymmetric loads, or influences of factors such as switch deadtime), in a power supply cycle, an amount of charge flowing into a series connection point between the first capacitor C1 and the second capacitor C2 (or referred to as a neutral point of the inverter circuit 11) is different from an amount of charge flowing out of the series connection point. In other words, in the inverter circuit 11, amounts of charged energy (or discharged energy) of the two groups of capacitors are not equal, resulting in unequal voltages of the two groups of capacitors in the inverter circuit 11. (In other words, in the inverter circuit 11, a positive direct current bus voltage and a negative direct current bus voltage are unbalanced, or voltages at the neutral point of the inverter circuit 11 are unbalanced). This distorts the output voltages (or the output currents) of the inverter 1 and even damages a power component in a system. Therefore, when the inverter circuit works, a difference between end voltage values of the two groups of capacitors in the inverter circuit 11 needs to be controlled, so that the positive direct current bus voltage and the negative direct current bus voltage of the inverter circuit 11 keep balanced. Herein, the inverter 1 may further include a collection circuit 12, a balanced circuit 13, and an inductor. Herein, the collection circuit 12 may obtain the direct current bus voltage of the inverter circuit 11, (for example, the positive direct current bus voltage or the negative direct current bus voltage, and the voltage of the series connection point between the first capacitor C1 and the second capacitor C2 (or referred to as the neutral point of the inverter circuit 11)), to obtain an end voltage of a target capacitor (the first capacitor C1 or the second capacitor C2). When an end voltage value of the target capacitor is less than or equal to a voltage threshold (for example, a first voltage threshold), it may be considered that the difference between the end voltage value of the first capacitor and the end voltage value of the second capacitor is large. In other words, the positive and negative direct current bus voltages of the inverter circuit are in an unbalanced state. In this case, the balanced circuit may adjust a current for charging the target capacitor through the inductor, to reduce the difference between the end voltage values of the two groups of capacitors, so that the positive direct current bus voltage and the negative direct current bus voltage of the inverter circuit 11 keep balanced. Herein, when the difference between the end voltage values of the two groups of capacitors in the inverter circuit 11 is large, the inverter 1 may use the balanced circuit 13 to adjust an output current of the inductor to charge the target capacitor. This reduces the difference between the end voltage values of the two groups of capacitors in the inverter circuit 11, and improves stability and power supply efficiency of the inverter. A structure is simple, and the method is simple with high applicability.

The following uses examples to describe the inverter provided in this application and a working principle of the inverter with reference to FIG. 2 to FIG. 9.

FIG. 2 is a schematic diagram of a structure of an inverter according to an embodiment of this application. As shown in FIG. 2, a power supply system includes a power supply, an inverter, and a load. The inverter includes an inverter circuit 101, a collection circuit 102, a balanced circuit 103, and an inductor. The inverter circuit 101 may include at least one switching bridge arm, and a first capacitor C1 and a second capacitor C2 connected in series. The balanced circuit 103 may include a plurality of switching transistors. Herein, the inverter circuit 101 may be a multi-level inverter circuit or a topology circuit of a multi-level inverter circuit. The inverter circuit 101 shown in FIG. 2 is only a three-level inverter circuit, and includes the first capacitor C1 and the second capacitor C2 connected in series and three switching bridge arms, namely, a switching bridge arm including a switching transistor Ta1, a switching transistor Ta2, a switching transistor Ta3, and a switching transistor Ta4, a switching bridge arm including a switching transistor Tb 1, a switching transistor Tb2, a switching transistor Tb3, and a switching transistor Tb4, and a switching bridge arm including a switching transistor Tc1, a switching transistor Tc2, a switching transistor Tc3, and a switching transistor Tc4. Herein, one end of the inverter circuit 101 may be configured to connect to the power supply through a positive direct current bus and a negative direct current bus, and the other end of the inverter circuit 101 may be configured to connect to a load. The first capacitor C1 and the second capacitor C2 are connected in series and then may be connected in parallel to the at least one switching bridge arm between the positive direct current bus and the negative direct current bus. The collection circuit 102 may be connected to the positive direct current bus, the negative direct current bus, a series connection point between the first capacitor C1 and the second capacitor C2, and the balanced circuit 103 (as shown in the dashed lines in FIG. 2). The balanced circuit 103 may be connected to the series connection point between the first capacitor C1 and the second capacitor C2 through the inductor. Herein, the collection circuit 102 may detect a direct current bus voltage (for example, a positive direct current bus voltage, a negative direct current bus voltage, and a voltage of the series connection point between the first capacitor C1 and the second capacitor C2), to obtain an end voltage value of a target capacitor. In the first capacitor C1 and the second capacitor C2, the target capacitor is a capacitor with a smaller end voltage value. Herein, the balanced circuit 103 may be configured to: when the end voltage value of the target capacitor is less than or equal to a first voltage threshold, control on or off of the plurality of switching transistors, to adjust a current for charging the target capacitor through the inductor and reduce a difference between the end voltage values of the target capacitor and a non-target capacitor in the two groups of capacitors.

It may be understood that the collection circuit 102 may obtain the direct current bus voltage of the inverter circuit 101 (for example, the positive direct current bus voltage and/or the negative direct current bus voltage), and the voltage of the series connection point between the first capacitor C1 and the second capacitor C2 (or referred to as a neutral point of the inverter circuit 101), to obtain the end voltage of the target capacitor. Herein, in the first capacitor C1 and the second capacitor C2, the target capacitor may be a capacitor with a smaller end voltage value. When the end voltage value of the target capacitor is less than or equal to a voltage threshold (for example, the first voltage threshold), it may be considered that the difference between the end voltage value of the first capacitor C1 and the end voltage value of the second capacitor C2 is large. In other words, the positive and negative direct current bus voltages of the inverter circuit 101 are in an unbalanced state. In this case, the balanced circuit 103 needs to charge the capacitor (for example, the target capacitor). Herein, the first voltage threshold may be determined based on a rated end voltage value of a capacitor (the first capacitor C1 or the second capacitor C2) in the inverter circuit 101, and may be determined based on a voltage threshold obtained, collected, received, detected, or stored by the inverter (for example, the first voltage threshold may be a voltage value less than a 1/2 bus voltage, where the bus voltage is a voltage difference between the positive direct current bus voltage and the negative direct current bus voltage). This may be specifically set based on an application scenario. It may be understood that the first voltage threshold herein may be one voltage value, may be a plurality of voltage values, or may be a voltage interval including a plurality of voltage values.

In some feasible implementations, the balanced circuit 103 may determine, in a plurality of manners, whether the target capacitor needs to be charged. A manner in which the end voltage of the target capacitor is compared with the first voltage threshold is only one of the manners. The balanced circuit 103 may alternatively determine, in another manner, whether the capacitor of the inverter circuit 101 needs to be charged. For example, when the difference between the end voltage value of the first capacitor C1 and the end voltage value of the second capacitor C2 is greater than or equal to a specific threshold, or when a voltage difference between the end voltage value of the first capacitor C1 (or the second capacitor C2) and the 1/2 bus voltage is greater than or equal to a specific threshold, the balanced circuit 103 may determine that the capacitor of the inverter circuit 101 needs to be charged. This application describes only an example in which the balanced circuit 103 compares the end voltage of the target capacitor with the first voltage threshold to determine whether the capacitor of the inverter circuit 101 needs to be charged. Another comparison method may be set based on a specific application scenario, and shall also fall within the coverage scope of the present invention. Herein, after the balanced circuit 103 determines that the difference between the end voltage value of the first capacitor C1 and the end voltage value of the second capacitor C2 is large (for example, by comparing the end voltage of the target capacitor with the first voltage threshold), or determines that the positive and negative direct current bus voltages of the inverter circuit 101 are in the unbalanced state, the balanced circuit 103 may charge the target capacitor through the inductor, to increase the end voltage value of the target capacitor. Herein, the balanced circuit 103 includes the plurality of switching transistors. The balanced circuit 103 may control on or off of the switching transistors, to adjust the current for charging the target capacitor through the inductor (for example, increasing the current for charging the target capacitor) and further reduce the difference between the end voltage values of the target capacitor and a non-target capacitor in the two groups of capacitors (in other words, reducing the difference between the end voltage values of the first capacitor C1 and the second capacitor C2). In other words, the positive direct current bus voltage and the negative direct current bus voltage of the inverter circuit 101 are balanced.

According to this application, when it is determined that the difference between the end voltage value of the first capacitor C1 and the end voltage value of the second capacitor C2 is large, the inverter may use the balanced circuit 103 to adjust the output current of the inductor to charge the target capacitor. This reduces the difference between the end voltage values of the two groups of capacitors in the inverter circuit 101, balances the positive and negative direct current bus voltages, and improves the stability and power supply efficiency of the inverter. The structure is simple, and the method is simple with high applicability.

In some feasible implementations, the balanced circuit 103 may further be configured to: when the end voltage value of the target capacitor is greater than or equal to a second voltage threshold, control the plurality of switching transistors to remain off, to stop charging the target capacitor. Herein, when the end voltage value of the target capacitor is greater than or equal to a voltage threshold (for example, the second voltage threshold), it may be considered that the difference between the end voltage value of the first capacitor C1 and the end voltage value of the second capacitor C2 is small. In other words, the positive and negative direct current bus voltages of the inverter circuit 101 are in a balanced state. In this case, the balanced circuit 103 does not need to charge the capacitor (for example, the target capacitor). Herein, the second voltage threshold may be determined based on a rated end voltage value of a capacitor (the first capacitor C1 or the second capacitor C2) in the inverter circuit 101, and may be determined based on a voltage threshold obtained, collected, received, detected, or stored by the inverter (for example, the second voltage threshold may be a voltage value less than a 1/2 bus voltage and greater than or equal to the first voltage threshold). This may be specifically set based on an application scenario. It may be understood that the second voltage threshold herein may be one voltage value, may be a plurality of voltage values, or may be a voltage interval including a plurality of voltage values. Herein, the second voltage threshold may be greater than or equal to the first voltage threshold. When the second voltage threshold is greater than the first voltage threshold, the inverter does not use the balanced circuit 103 to repeatedly start/stop charging the target capacitor when the end voltage of the target capacitor is not stably greater than the first voltage threshold. In other words, when the second voltage threshold is greater than the first voltage threshold, after the end voltage of the target capacitor is stable (for example, being stably greater than the first voltage threshold), the inverter may determine that the difference between the end voltage value of the first capacitor C1 and the end voltage value of the second capacitor C2 is small, or determine that the positive direct current bus voltage and the negative direct current bus voltage of the inverter circuit 101 are in the balanced state, and then stop using the balanced circuit 103 to charge the target capacitor.

It may be understood that the balanced circuit 103 may determine, in a plurality of manners, whether to stop charging the target capacitor. A manner in which the end voltage of the target capacitor is compared with the second voltage threshold is only one of the manners. The balanced circuit 103 may alternatively determine, in another manner, whether to stop charging the capacitor of the inverter circuit 101. For example, when the difference between the end voltage value of the first capacitor C1 and the end voltage value of the second capacitor C2 is less than or equal to a threshold, or when a voltage difference between the end voltage value of the first capacitor C1 (or the second capacitor C2) and the 1/2 bus voltage is less than or equal to a threshold, the balanced circuit 103 may determine that the capacitor of the inverter circuit 101 does not need to be charged. This application describes only an example in which the balanced circuit 103 compares the end voltage of the target capacitor with the second voltage threshold to determine whether to stop charging the capacitor of the inverter circuit 101. Another comparison method may be set based on a specific application scenario, and shall also fall within the coverage scope of the present invention. Herein, after the balanced circuit 103 determines that the difference between the end voltage value of the first capacitor C1 and the end voltage value of the second capacitor C2 is small (for example, by comparing the end voltage of the target capacitor with the second voltage threshold), or determines that the positive and negative direct current bus voltages of the inverter circuit 101 are in the balanced state, the balanced circuit 103 may stop charging the target capacitor, to increase the end voltage value of the target capacitor. Herein, the balanced circuit 103 may control the switching transistors in the balanced circuit 103 to remain off, to stop charging the target capacitor. This saves electric energy and reduces costs.

According to this application, when it is determined that the difference between the end voltage value of the first capacitor C1 and the end voltage value of the second capacitor C2 is small, the inverter may stop using the balanced circuit 103 to charge the target capacitor. This reduces electric energy consumed by the balanced circuit 103, reduces costs, and improves the stability and power supply efficiency of the inverter. The structure is simple, and the method is simple with high applicability.

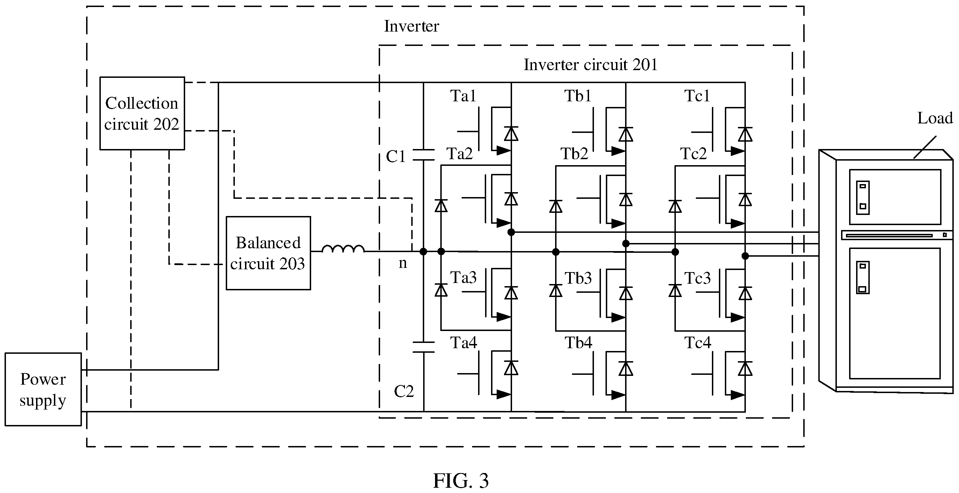

In some feasible implementations, the inverter circuit may be a multi-level inverter circuit of another structure and a topology circuit of the multi-level inverter circuit. FIG. 3 is a schematic diagram of another structure of an inverter according to an embodiment of this application. As shown in FIG. 3, an inverter circuit 201 may be a three-level inverter circuit of another structure. Herein, the inverter circuit 201 may include the first capacitor C1 and the second capacitor C2 connected in series and three switching bridge arms, that is, a switching bridge arm including a switching transistor Ta1, a switching transistor Ta2, a switching transistor Ta3, a switching transistor Ta4 and two diodes, a switching bridge arm including a switching transistor Tb1, a switching transistor Tb2, a switching transistor Tb3, a switching transistor Tb4, and two diodes, and a switching bridge arm including a switching transistor Tc 1, a switching transistor Tc2, a switching transistor Tc3, a switching transistor Tc4, and two diodes. Connection relationships and working principles of a collection circuit 202 and a balanced circuit 203 in FIG. 3 are the same as those of the collection circuit 102 and the balanced circuit 103 in FIG. 2. Details are not described herein again.

The inverter provided in this application is used in any inverter circuit including two groups of capacitors connected in series and a switching bridge arm and a topology structure thereof. According to this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

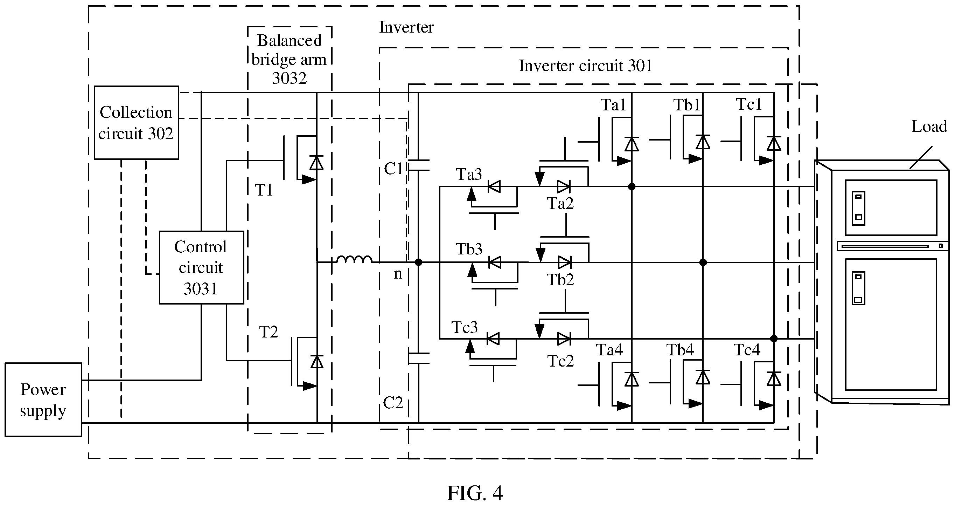

In some feasible implementations, the balanced circuit may include a control circuit and at least one balanced bridge arm. FIG. 4 is a schematic diagram of another structure of an inverter according to an embodiment of this application. As shown in FIG. 4, a balanced circuit may include a control circuit 3031 and at least one balanced bridge arm 3032. The balanced bridge arm 3032 may include two switching transistors connected in series between a positive direct current bus and a negative direct current bus. The control circuit 3031 may be connected to an inductor through the balanced bridge arm 3032. The collection circuit 302 may be connected to the control circuit 3031. Herein, the collection circuit 302 may further obtain a half bus voltage value based on the positive direct current bus voltage and the negative direct current bus voltage. Herein, the control circuit 3031 may generate balanced modulation signals based on an end voltage value of a target capacitor and the half bus voltage value, and control on or off of the switching transistors in the at least one balanced bridge arm 3032 based on the balanced modulation signals, to adjust an output current of the inductor. Herein, the balanced circuit includes the at least one balanced bridge arm 3032. As shown in FIG. 4, the balanced bridge arm 3032 in the balanced circuit may be a half-bridge circuit including two switching transistors (for example, a switching transistor T1 and a switching transistor T2) connected in series.

In some feasible implementations, the collection circuit 302 may obtain the positive direct current bus voltage and the negative direct current bus voltage that are of an inverter circuit 301, and obtain the half bus voltage value (that is, the 1/2 bus voltage value) based on the positive direct current bus voltage and the negative direct current bus voltage. Herein, the control circuit 3031 (for example, a voltage regulation loop (for example, a proportional-integral regulation circuit) and a drive control circuit 3031, or another circuit with a voltage regulation function and a drive control function) may generate the balanced modulation signals based on the end voltage value of the target capacitor and the half bus voltage value, and control on or off of the switching transistors in the balanced circuit. For example, the control circuit 3031 may generate signals such as pulse width modulation (pulse width modulation, PWM) waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor C1 and the end voltage value of the second capacitor C2, and balance the positive and negative direct current bus voltages. It may be understood that the control circuit 3031 provided in this application may use discontinuous pulse width modulation (discontinuous pulse width modulation, DPWM) waves as the balanced modulation signals, or may use other PWM waves (for example, sinusoidal pulse width modulation (sinusoidal pulse width modulation, SPWM) waves, third harmonic injection pulse width modulation (third harmonic injection pulse width modulation, THIPWM) waves, or carrier space vector pulse width modulation (carrier based space vector pulse width modulation, CBPWM) waves) as the balanced modulation signals, or may alternatively use the driving pulse signals generated based on these PWM waves as the balanced modulation signals. This is applicable to a wide range of scenarios and has good control effect.

In some feasible implementations, the collection circuit 302 may further be configured to obtain an output current value of a series connection point between the first capacitor C1 and the second capacitor C2 and an input current value of the series connection point between the first capacitor C1 and the second capacitor C2. Herein, the control circuit 3031 may further generate a voltage regulation instruction based on the end voltage value of the target capacitor and the half bus voltage value; generate the balanced modulation signals based on the voltage regulation instruction, the output current value of the series connection point between the first capacitor C1 and the second capacitor C2, and the input current value of the series connection point between the first capacitor C1 and the second capacitor C2; and control on or off of the switching transistors in the at least one balanced bridge arm 3032 based on the balanced modulation signals, to adjust the output current of the inductor. Herein, the collection circuit 302 may obtain the output current value of the series connection point between the first capacitor C1 and the second capacitor C2 (or referred to as the neutral point of the inverter circuit 301) and the input current value of the series connection point between the first capacitor C1 and the second capacitor C2 (or referred to as the neutral point of the inverter circuit 301). Herein, the output current value of the series connection point between the first capacitor C1 and the second capacitor C2 may be determined by adding values of currents output from the series connection point between the first capacitor C1 and the second capacitor C2 to switching bridge arms of the inverter circuit 301, or may be determined in another manner. Herein, the input current value of the series connection point between the first capacitor C1 and the second capacitor C2 may be determined based on an output current of the inductor connected to the series connection point between the first capacitor C1 and the second capacitor C2, or may be determined in another manner. Herein, reference directions of the output current and the input current of the series connection point between the first capacitor C1 and the second capacitor C2 (or referred to as the neutral point of the inverter circuit 301) may be determined based on the target capacitor. For example, a direction from the target capacitor to the series connection point between the first capacitor C1 and the second capacitor C2 is a forward direction of the output current of the series connection point between the first capacitor C1 and the second capacitor C2. A direction from the series connection point between the first capacitor C1 and the second capacitor C2 to the target capacitor is a forward direction of the input current of the series connection point between the first capacitor C1 and the second capacitor C2. Herein, the control circuit 3031 (for example, a voltage regulation loop or another circuit with a voltage regulation function) may generate the voltage regulation instruction based on the end voltage value of the target capacitor and the half bus voltage value. Further, the control circuit 3031 (for example, a current regulation loop and a drive control circuit, or another circuit with a current regulation function and a drive control function) may generate the balanced modulation signals (for example, balanced modulation signals such as PWM waves) based on the voltage regulation instruction, the output current value of the series connection point between the first capacitor C1 and the second capacitor C2, and the input current value of the series connection point between the first capacitor C1 and the second capacitor C2, and control on or off of the switching transistors in the at least one balanced bridge arm 3032 based on the balanced modulation signals, to adjust the output current of the inductor. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor C1 and the end voltage value of the second capacitor C2, and balance the positive and negative direct current bus voltages. It may be understood that the control circuit 3031 provided in this application may use DPWM waves as the balanced modulation signals, or may use other PWM waves (for example, SPWM waves, THIPWM waves, or CBPWM waves) as the balanced modulation signals. This is applicable to a wide range of scenarios and has good control effect.

In some feasible implementations, the collection circuit 302 may further obtain the half bus voltage value based on the positive direct current bus voltage and the negative direct current bus voltage, and obtain the output current value of the series connection point between the first capacitor C1 and the second capacitor C2 and the input current value of the series connection point between the first capacitor C1 and the second capacitor C2. Herein, the control circuit 3031 may further generate the balanced modulation signals based on the end voltage value of the target capacitor, the half bus voltage value, the output current value of the series connection point between the first capacitor C1 and the second capacitor C2, and the input current value of the series connection point between the first capacitor C1 and the second capacitor C2, and control on or off of the switching transistors in the at least one balanced bridge arm 3032 based on the balanced modulation signals, to adjust the output current of the inductor. Herein, the control circuit 3031 (for example, a predictive control circuit and a drive control circuit, or another circuit with a predictive control function and a drive control function) may generate the balanced modulation signals based on the end voltage value of the target capacitor, the half bus voltage value, the output current value of the series connection point between the first capacitor and the second capacitor, and the input current value of the series connection point between the first capacitor and the second capacitor. Herein, the predictive control circuit is a circuit that can simulate an inverter structure. Predictive control may predict an operating status of the inverter based on input parameters of the inverter (for example, the end voltage value of the target capacitor, the half bus voltage value, and the output current value and input current value of the series connection point between the first capacitor and the second capacitor), to obtain the balanced modulation signals that may keep the neutral-point voltage of the inverter balanced. Further, the control circuit 3031 (for example, a current regulation loop and a drive control circuit, or another circuit with a current regulation function and a drive control function) may generate the balanced modulation signals based on the half bus voltage value, the output current value of the series connection point between the first capacitor C1 and the second capacitor C2, and the input current value of the series connection point between the first capacitor C1 and the second capacitor C2, and control on or off of the switching transistors in the balanced circuit. For example, the control circuit 3031 may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor C1 and the end voltage value of the second capacitor C2, and balance the positive and negative direct current bus voltages. It may be understood that the control circuit 3031 provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

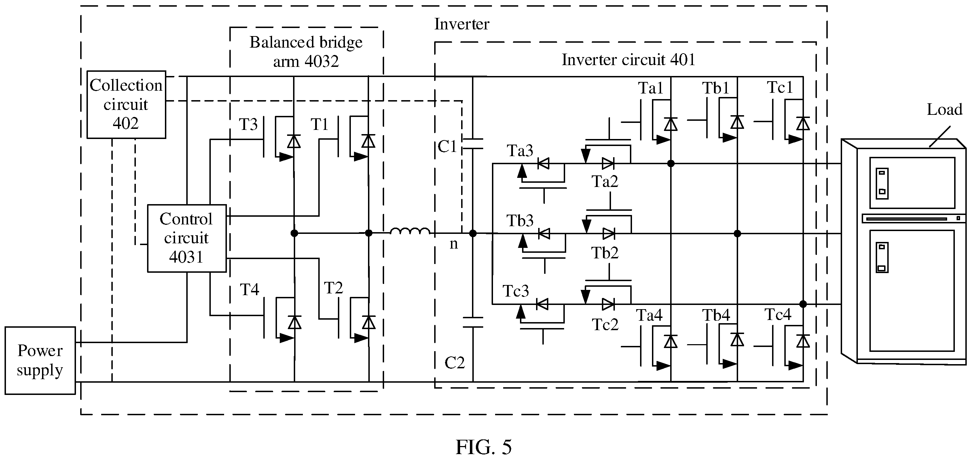

In some feasible implementations, the balanced circuit may include a plurality of balanced bridge arms. For specific details, refer to FIG. 5. FIG. 5 is a schematic diagram of another structure of an inverter according to an embodiment of this application. As shown in FIG. 5, a balanced bridge arm 4032 in a balanced circuit may be a full-bridge circuit in which four switching transistors (for example, a switching transistor T1, a switching transistor T2, a switching transistor T3, and a switching transistor T4) form two balanced bridge arms. The full-bridge circuit may be connected between positive and negative direct current buses. It may be understood that connection manners and working principles of an inverter circuit 401, a collection circuit 402, and a control circuit 4031 in the balanced circuit in FIG. 5 are the same as those of the inverter circuit 301, the collection circuit 302, and the control circuit 3031 in the balanced circuit in FIG. 4. Details are not described herein again.

It may be understood that the inverter provided in this application is used in any balanced circuit that may adjust an output current of an inductor. According to this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

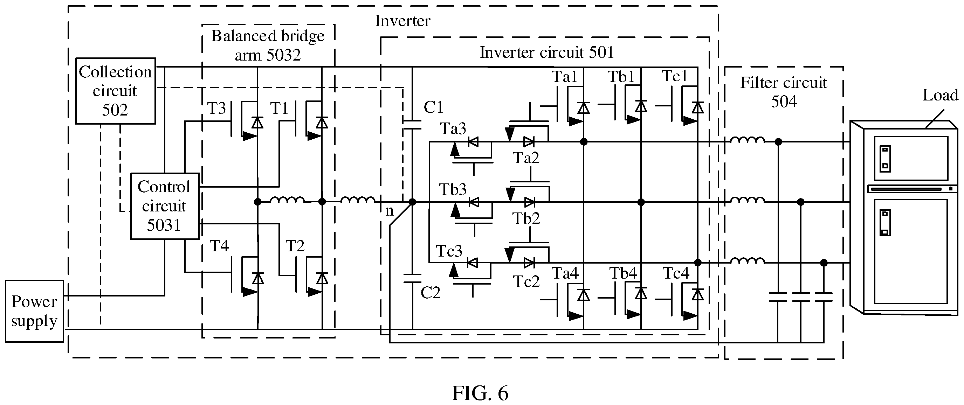

In some feasible implementations, the inverter may further include a filter circuit. For specific details, refer to FIG. 6. FIG. 6 is a schematic diagram of another structure of an inverter according to an embodiment of this application. As shown in FIG. 6, a filter circuit 504 may be connected to switching bridge arms and a load in an inverter circuit 501. It may be understood that connection manners and working principles of the inverter circuit 501, a collection circuit 502, and a control circuit 5031 and a balanced bridge arm 5032 in a balanced circuit in FIG. 6 are the same as those of the inverter circuit 401, the collection circuit 402, and the control circuit 4031 and the balanced bridge arm 4032 in the balanced circuit in FIG. 5. Details are not described herein again. Herein, the filter circuit 504 may be an LC filter circuit or an LCL filter circuit (not shown in the figure) that includes an inductor and a capacitor, or another circuit having a filter function. Herein, the filter circuit 504 may filter out a clutter component (for example, a high-frequency component with high frequency) included in the output current (or the output voltage) of the inverter circuit 501, to improve power supply stability.

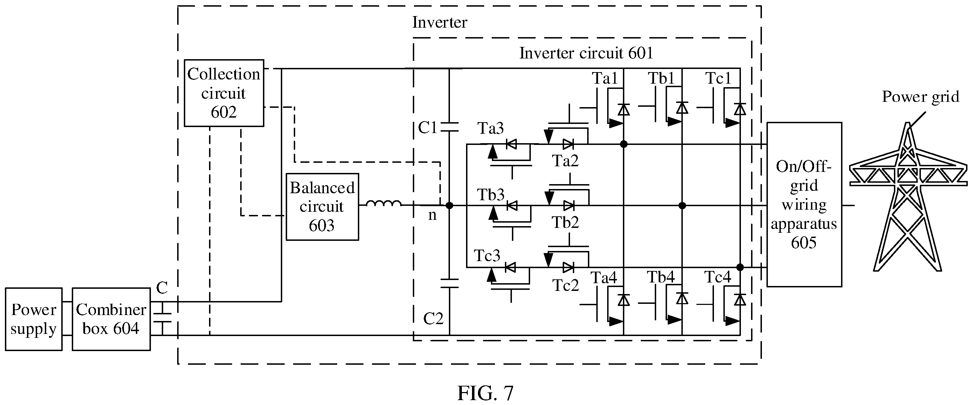

This application further provides a power supply system. For specific details, refer to FIG. 7. FIG. 7 is a schematic diagram of a structure of a power supply system according to an embodiment of this application. As shown in FIG. 7, the power supply system may include a power supply and an inverter. Herein, the inverter is used in the inverters shown in FIG. 1 to FIG. 6. In FIG. 7, only the inverter shown in FIG. 2 is used as an example for description. It may be understood that connection manners and working principles of an inverter circuit 601, a collection circuit 602, and a balanced circuit 603 in FIG. 7 are the same as those of the inverter circuit 101, the collection circuit 102, and the balanced circuit 103 in FIG. 2. Details are not described herein again. The power supply system shown in FIG. 7 may further include a combiner box 604. The power supply is connected to the inverter through the combiner box 604. The power supply system may further include direct current buses. The combiner box 604 may be connected to the load through the direct current buses and the inverter. Herein, one bus capacitor C or a plurality of bus capacitors connected in series are disposed on the direct current buses, to store energy. An inverter apparatus may perform conversion on electric energy that is output by the power supply and that is stored at two ends of the bus capacitor, and output corresponding currents and voltages to maintain working of a power grid. Refer to FIG. 7. Herein, the load may be the power grid. The power supply system may further include an on/off-grid wiring apparatus 605. The inverter may use the on/off-grid wiring apparatus 605 to supply power to an electric device or a power transmission device in the power grid, for example, a transmission line, a power transfer station, a battery, a communication base station, or a household device.

In this application, the functional modules in the inverter and the power supply system have various and flexible composition manners. This may adapt to different power supply environments, to improve diversity of application scenarios of the power supply system and enhance adaptability of the power supply system. In addition, when the difference between the end voltage values of the two groups of capacitors in the inverter circuit is large, any power supply system or inverter shown in FIG. 1 to FIG. 7 may use the balanced circuit to adjust an output current of the inductor to charge the target capacitor. This reduces the difference between the end voltage values of the two groups of capacitors in the inverter circuit, and improves stability and power supply efficiency of the inverter. A structure is simple, and the method is simple with high applicability. For ease of description, the following uses the structure of the inverter shown in FIG. 2 as an example to describe an on-grid control method provided in an embodiment of this application.

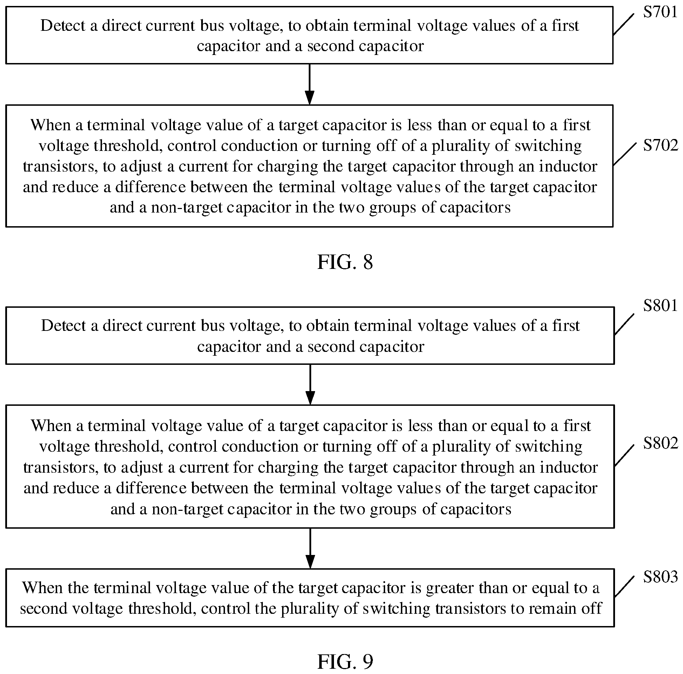

FIG. 8 is a schematic flowchart of a control method according to this application. The control method provided in this application is applicable to an inverter, and includes but is not limited to any one of the power supply system or inverter of a power supply system shown in FIG. 1 to FIG. 7. As shown in FIG. 8, the control method provided in this application includes the following steps.

S701: Detect a direct current bus voltage, to obtain end voltage values of a first capacitor and a second capacitor.

S702: When an end voltage value of a target capacitor is less than or equal to a first voltage threshold, control on or off of a plurality of switching transistors, to adjust a current for charging the target capacitor through an inductor and reduce a difference between the end voltage values of the target capacitor and a non-target capacitor in the two groups of capacitors.

In this implementation of this application, a collection circuit may obtain the direct current bus voltage of an inverter circuit (for example, a positive direct current bus voltage and/or a negative direct current bus voltage, and a voltage of a series connection point (or referred to as a neutral point of the inverter circuit) between the first capacitor and the second capacitor), to obtain the end voltage of the target capacitor. Herein, in the first capacitor and the second capacitor, the target capacitor may be a capacitor with a smaller end voltage value. When the end voltage value of the target capacitor is less than or equal to a voltage threshold (for example, the first voltage threshold), it may be considered that the difference between the end voltage value of the first capacitor and the end voltage value of the second capacitor is large. In other words, the positive and negative direct current bus voltages of the inverter circuit are in an unbalanced state. In this case, a balanced circuit needs to charge the capacitor (for example, the target capacitor). Herein, the first voltage threshold may be determined based on a rated end voltage value of a capacitor (the first capacitor or the second capacitor) in the inverter circuit, and may be determined based on a voltage threshold obtained, collected, received, detected, or stored by the inverter (for example, the first voltage threshold may be a voltage value less than a 1/2 bus voltage, where the bus voltage is a voltage difference between the positive direct current bus voltage and the negative direct current bus voltage). This may be specifically set based on an application scenario. It may be understood that the first voltage threshold herein may be one voltage value, may be a plurality of voltage values, or may be a voltage interval including a plurality of voltage values.

It may be understood that the balanced circuit may determine, in a plurality of manners, whether the target capacitor needs to be charged. A manner in which the end voltage of the target capacitor is compared with the first voltage threshold is only one of the manners. The balanced circuit may alternatively determine, in another manner, whether the capacitor of the inverter circuit needs to be charged. For example, when the difference between the end voltage value of the first capacitor and the end voltage value of the second capacitor is greater than or equal to a threshold, or when a voltage difference between the end voltage value of the first capacitor (or the second capacitor) and the 1/2 bus voltage is greater than or equal to a threshold, the balanced circuit may determine that the capacitor of the inverter circuit needs to be charged. This application describes only an example in which the balanced circuit compares the end voltage of the target capacitor with the first voltage threshold to determine whether the capacitor of the inverter circuit needs to be charged. Another comparison method may be set based on a specific application scenario, and shall also fall within the coverage scope of the present invention. Herein, after the balanced circuit determines that the difference between the end voltage value of the first capacitor and the end voltage value of the second capacitor is large (for example, by comparing the end voltage of the target capacitor with the first voltage threshold), or determines that the positive and negative direct current bus voltages of the inverter circuit are in the unbalanced state, the balanced circuit may charge the target capacitor through the inductor, to increase the end voltage value of the target capacitor. Herein, the balanced circuit includes the plurality of switching transistors. The balanced circuit may control on or off of the switching transistors, to adjust the current for charging the target capacitor through the inductor (for example, increasing the current for charging the target capacitor) and further reduce the difference between the end voltage values of the target capacitor and a non-target capacitor in the two groups of capacitors (in other words, reducing the difference between the end voltage values of the first capacitor and the second capacitor). In other words, the positive direct current bus voltage and the negative direct current bus voltage of the inverter circuit are balanced.

According to this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

In some feasible implementations, refer to FIG. 9. FIG. 9 is another schematic flowchart of a control method according to this application. As shown in FIG. 9, after step S701 of detecting a direct current bus voltage, to obtain end voltage values of a first capacitor and a second capacitor, a balanced circuit (or an inverter) may stop charging the target capacitor based on the end voltage value of the target capacitor. The control method may include the following steps.

S801: Detect a direct current bus voltage, to obtain end voltage values of a first capacitor and a second capacitor.

S802: When an end voltage value of a target capacitor is less than or equal to a first voltage threshold, control on or off of a plurality of switching transistors, to adjust a current for charging the target capacitor through an inductor and reduce a difference between the end voltage values of the target capacitor and a non-target capacitor in the two groups of capacitors.

S803: When the end voltage value of the target capacitor is greater than or equal to a second voltage threshold, control the plurality of switching transistors to remain off.

Herein, when the end voltage value of the target capacitor is greater than or equal to a voltage threshold (for example, the second voltage threshold), it may be considered that the difference between the end voltage value of the first capacitor and the end voltage value of the second capacitor is small. In other words, positive and negative direct current bus voltages of an inverter circuit are in a balanced state. In this case, the balanced circuit does not need to charge the capacitor (for example, the target capacitor). Herein, the second voltage threshold may be determined based on a rated end voltage value of a capacitor (the first capacitor or the second capacitor) in the inverter circuit, and may be determined based on a voltage threshold obtained, collected, received, detected, or stored by the inverter (for example, the second voltage threshold may be a voltage value less than a 1/2 bus voltage and greater than or equal to the first voltage threshold). This may be specifically set based on an application scenario. It may be understood that the second voltage threshold herein may be one voltage value, may be a plurality of voltage values, or may be a voltage interval including a plurality of voltage values. Herein, the second voltage threshold may be greater than or equal to the first voltage threshold. When the second voltage threshold is greater than the first voltage threshold, the inverter does not use the balanced circuit to repeatedly start/stop charging the target capacitor when the end voltage of the target capacitor is not stably greater than the first voltage threshold. In other words, when the second voltage threshold is greater than the first voltage threshold, after the end voltage of the target capacitor is stable (for example, being stably greater than the first voltage threshold), the inverter may determine that the difference between the end voltage value of the first capacitor and the end voltage value of the second capacitor is small, or determine that the positive direct current bus voltage and the negative direct current bus voltage of the inverter circuit are in the balanced state, and then stop using the balanced circuit to charge the target capacitor.

It may be understood that the balanced circuit may determine, in a plurality of manners, whether to stop charging the target capacitor. A manner in which the end voltage of the target capacitor is compared with the second voltage threshold is only one of the manners. The balanced circuit may alternatively determine, in another manner, whether to stop charging the capacitor of the inverter circuit. For example, when the difference between the end voltage value of the first capacitor and the end voltage value of the second capacitor is less than or equal to a threshold, or when a voltage difference between the end voltage value of the first capacitor (or the second capacitor) and the 1/2 bus voltage is less than or equal to a threshold, the balanced circuit may determine that the capacitor of the inverter circuit does not need to be charged. This application describes only an example in which the balanced circuit compares the end voltage of the target capacitor with the second voltage threshold to determine whether to stop charging the capacitor of the inverter circuit. Another comparison method may be set based on a specific application scenario, and shall also fall within the coverage scope of the present invention. Herein, after the balanced circuit determines that the difference between the end voltage value of the first capacitor and the end voltage value of the second capacitor is small (for example, by comparing the end voltage of the target capacitor with the second voltage threshold), or determines that the positive and negative direct current bus voltages of the inverter circuit are in the balanced state, the balanced circuit may stop charging the target capacitor, to increase the end voltage value of the target capacitor. Herein, the balanced circuit may control the switching transistors in the balanced circuit to remain off, to stop charging the target capacitor. This saves electric energy and reduces costs.

According to this application, when it is determined that the difference between the end voltage value of the first capacitor and the end voltage value of the second capacitor is small, the inverter may stop using the balanced circuit to charge the target capacitor. This reduces electric energy consumed by the balanced circuit, reduces costs, and improves the stability and power supply efficiency of the inverter. The structure is simple, and the method is simple with high applicability.

In some feasible implementations, after step S701 or S801 of detecting the direct current bus voltage to obtain the end voltage values of the first capacitor and the second capacitor, the method may further include:
obtaining a half bus voltage value based on the direct current bus voltage; and generating balanced modulation signals based on the end voltage value of the target capacitor and the half bus voltage value, and controlling on or off of the switching transistors in at least one balanced bridge arm based on the balanced modulation signals, to adjust an output current of the inductor.

According to this application, the balanced circuit includes the at least one balanced bridge arm. For example, the balanced circuit may include a half-bridge circuit in which two switching transistors connected in series are used as one balanced bridge arm, or may include a full-bridge circuit in which four switching transistors are used as two balanced bridge arms. Herein, the collection circuit may obtain the positive direct current bus voltage and the negative direct current bus voltage that are of the inverter circuit, and obtain the half bus voltage value (that is, the 1/2 bus voltage value) based on the positive direct current bus voltage and the negative direct current bus voltage. Herein, the control circuit (for example, a voltage regulation loop (for example, a proportional-integral regulation circuit) and a drive control circuit, or another circuit with a voltage regulation function and a drive control function) may generate the balanced modulation signals based on the end voltage value of the target capacitor and the half bus voltage value, and control on or off of the switching transistors in the balanced circuit. For example, the control circuit may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

In some feasible implementations, after step S701 or S801 of detecting the direct current bus voltage to obtain the end voltage values of the first capacitor and the second capacitor, the method may further include:
obtaining an output current value of the series connection point between the first capacitor and the second capacitor and an input current value of the series connection point between the first capacitor and the second capacitor; and generating a voltage regulation instruction based on the end voltage value of the target capacitor and the half bus voltage value; generating the balanced modulation signals based on the voltage regulation instruction, the output current value of the series connection point between the first capacitor and the second capacitor, and the input current value of the series connection point between the first capacitor and the second capacitor; and controlling on or off of the switching transistors in the at least one balanced bridge arm based on the balanced modulation signals, to adjust the output current of the inductor.

According to this application, the collection circuit may obtain the output current value of the series connection point between the first capacitor and the second capacitor (or referred to as the neutral point of the inverter circuit) and the input current value of the series connection point between the first capacitor and the second capacitor (or referred to as the neutral point of the inverter circuit). Herein, the output current value of the series connection point between the first capacitor and the second capacitor may be determined by adding values of currents output from the series connection point between the first capacitor and the second capacitor to switching bridge arms of the inverter circuit, or may be determined in another manner. Herein, the input current value of the series connection point between the first capacitor and the second capacitor may be determined based on an output current of the inductor connected to the series connection point between the first capacitor and the second capacitor, or may be determined in another manner. Herein, reference directions of the output current and the input current of the series connection point between the first capacitor and the second capacitor (or referred to as the neutral point of the inverter circuit) may be determined based on the target capacitor. For example, a direction from the target capacitor to the series connection point between the first capacitor and the second capacitor is a forward direction of the output current of the series connection point between the first capacitor and the second capacitor. A direction from the series connection point between the first capacitor and the second capacitor to the target capacitor is a forward direction of the input current of the series connection point between the first capacitor and the second capacitor. Herein, the control circuit (for example, a voltage regulation loop or another circuit with a voltage regulation function) may generate the voltage regulation instruction based on the end voltage value of the target capacitor and the half bus voltage value. Further, the control circuit (for example, a current regulation loop and a drive control circuit, or another circuit with a current regulation function and a drive control function) may generate the balanced modulation signals (for example, balanced modulation signals such as PWM waves) based on the voltage regulation instruction, the output current value of the series connection point between the first capacitor and the second capacitor, and the input current value of the series connection point between the first capacitor and the second capacitor, and control on or off of the switching transistors in the at least one balanced bridge arm based on the balanced modulation signals, to adjust the output current of the inductor. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals. This is applicable to a wide range of scenarios and has good control effect.

In some feasible implementations, after step S701 or S801 of detecting the direct current bus voltage to obtain the end voltage values of the first capacitor and the second capacitor, the method may further include:
obtaining the half bus voltage value based on direct current bus voltages (for example, the positive direct current bus voltage and the negative direct current bus voltage), and obtaining the output current value of the series connection point between the first capacitor and the second capacitor and the input current value of the series connection point between the first capacitor and the second capacitor; and generating the balanced modulation signals based on the end voltage value of the target capacitor, the half bus voltage value, the output current value of the series connection point between the first capacitor and the second capacitor, and the input current value of the series connection point between the first capacitor and the second capacitor, and controlling on or off of the switching transistors in the at least one balanced bridge arm based on the balanced modulation signals, to adjust the output current of the inductor.

Herein, the control circuit (for example, a predictive control circuit and a drive control circuit, or another circuit with a predictive control function and a drive control function) may generate the balanced modulation signals based on the end voltage value of the target capacitor, the half bus voltage value, the output current value of the series connection point between the first capacitor and the second capacitor, and the input current value of the series connection point between the first capacitor and the second capacitor. Further, the control circuit (for example, a current regulation loop and a drive control circuit, or another circuit with a current regulation function and a drive control function) may generate the balanced modulation signals based on the half bus voltage value, the output current value of the series connection point between the first capacitor and the second capacitor, and the input current value of the series connection point between the first capacitor and the second capacitor, and control on or off of the switching transistors in the balanced circuit. For example, the control circuit may generate signals such as PWM waves as the balanced modulation signals, or generate driving pulse signals based on the PWM waves as the balanced modulation signals. Herein, the balanced modulation signals may control an output current of the balanced circuit. The output current of the balanced circuit may charge the inductor. An output current of the inductor during discharging may charge the target capacitor. This may reduce the difference between the end voltage value of the first capacitor and the end voltage value of the second capacitor, and balance the positive and negative direct current bus voltages. It may be understood that the control circuit provided in this application may use DPWM waves as the balanced modulation signals, or may use other PWM waves (for example, SPWM waves, THIPWM waves, or CBPWM waves) as the balanced modulation signals, or may alternatively use the driving pulse signals generated based on these PWM waves as the balanced modulation signals. This is applicable to a wide range of scenarios and has good control effect.

In this application, when it is determined that the difference between the end voltage value of the first capacitor and the end voltage value of the second capacitor is large, the inverter may use the balanced circuit to adjust the output current of the inductor to charge the target capacitor. This reduces the difference between the end voltage values of the two groups of capacitors in the inverter circuit, balances the positive and negative direct current bus voltages, and improves the stability and power supply efficiency of the inverter. The structure is simple, and the method is simple with high applicability.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inverter, wherein the inverter comprises an inverter circuit, a collection circuit, a balanced circuit, and an inductor, the inverter circuit comprises at least one switching bridge arm, and a first capacitor and a second capacitor connected in series, and the balanced circuit comprises a plurality of switching transistors;
one end of the inverter circuit is configured to connect to a power supply through a positive direct current bus and a negative direct current bus, an other end of the inverter circuit is configured to connect to a load, the first capacitor and the second capacitor are connected in series and are then connected in parallel to the at least one switching bridge arm between the positive direct current bus and the negative direct current bus, the collection circuit is connected to the positive direct current bus, the negative direct current bus, a series connection point between the first capacitor and the second capacitor, and the balanced circuit, and the balanced circuit is connected to the series connection point between the first capacitor and the second capacitor through the inductor;
the collection circuit is configured to detect a direct current bus voltage, to obtain end voltage values of the first capacitor and the second capacitor; and
the balanced circuit is configured to: when an end voltage value of a target capacitor is less than or equal to a first voltage threshold, control on or off of the plurality of switching transistors, to adjust a current for charging the target capacitor through the inductor and reduce a difference between the end voltage values of the target capacitor and a non-target capacitor in the two groups of capacitors, wherein in the first capacitor and the second capacitor, the target capacitor is a capacitor with a smaller end voltage value.

2. The inverter according to claim 1, wherein the balanced circuit is further configured to: when the end voltage value of the target capacitor is greater than or equal to a second voltage threshold, control the plurality of switching transistors to remain off, to stop charging the target capacitor, wherein the second voltage threshold is greater than or equal to the first voltage threshold.

3. The inverter according to claim 1 or 2, wherein the balanced circuit comprises a control circuit and at least one balanced bridge arm, one balanced bridge arm comprises two switching transistors connected in series, the control circuit is connected to the inductor through the at least one balanced bridge arm, and the collection circuit is connected to the control circuit;
the collection circuit is further configured to obtain a half bus voltage value based on the direct current bus voltage; and
the control circuit is configured to generate balanced modulation signals based on the end voltage value of the target capacitor and the half bus voltage value, and control on or off of the switching transistors in the at least one balanced bridge arm based on the balanced modulation signals, to adjust an output current of the inductor.

4. The inverter according to claim 3, wherein the collection circuit is further configured to obtain an output current value of the series connection point between the first capacitor and the second capacitor and an input current value of the series connection point between the first capacitor and the second capacitor; and
the control circuit is further configured to: generate a voltage regulation instruction based on the end voltage value of the target capacitor and the half bus voltage value; generate the balanced modulation signals based on the voltage regulation instruction, the output current value of the series connection point between the first capacitor and the second capacitor, and the input current value of the series connection point between the first capacitor and the second capacitor; and control on or off of the switching transistors in the at least one balanced bridge arm based on the balanced modulation signals, to adjust the output current of the inductor.

5. The inverter according to any one of claims 1 to 4, wherein the balanced circuit further comprises the control circuit and the at least one balanced bridge arm, one balanced bridge arm comprises the two switching transistors connected in series, the control circuit is connected to the inductor through the at least one balanced bridge arm, and the collection circuit is connected to the control circuit;
the collection circuit is further configured to obtain the half bus voltage value based on the direct current bus voltage, and obtain the output current value of the series connection point between the first capacitor and the second capacitor and the input current value of the series connection point between the first capacitor and the second capacitor; and
the control circuit is further configured to generate the balanced modulation signals based on the end voltage value of the target capacitor, the half bus voltage value, the output current value of the series connection point between the first capacitor and the second capacitor, and the input current value of the series connection point between the first capacitor and the second capacitor, and control on or off of the switching transistors in the at least one balanced bridge arm based on the balanced modulation signals, to adjust the output current of the inductor.

6. The inverter according to claim 5, wherein the inverter further comprises a filter circuit, and the filter circuit is connected to the switching bridge arm in the inverter circuit and the load.

7. An inverter control method, wherein the control method is applied to an inverter, the inverter comprises an inverter circuit, a collection circuit, a balanced circuit, and an inductor, the inverter circuit comprises at least one switching bridge arm, and a first capacitor and a second capacitor connected in series, and the balanced circuit comprises a plurality of switching transistors; and
one end of the inverter circuit is configured to connect to a power supply through a positive direct current bus and a negative direct current bus, the other end of the inverter circuit is configured to connect to a load, the first capacitor and the second capacitor are connected in series and are then connected in parallel to the at least one switching bridge arm between the positive direct current bus and the negative direct current bus, the collection circuit is connected to the positive direct current bus, the negative direct current bus, a series connection point between the first capacitor and the second capacitor, and the balanced circuit, the balanced circuit is connected to the series connection point between the first capacitor and the second capacitor through the inductor, and the method comprises:
detecting a direct current bus voltage, to obtain end voltage values of the first capacitor and the second capacitor; and
when an end voltage value of a target capacitor is less than or equal to a first voltage threshold, controlling on or off of the plurality of switching transistors, to adjust a current for charging the target capacitor through the inductor and reduce a difference between the end voltage values of the target capacitor and a non-target capacitor in the two groups of capacitors, wherein in the first capacitor and the second capacitor, the target capacitor is a capacitor with a smaller end voltage value.

8. The control method according to claim 7, after the detecting a direct current bus voltage, to obtain end voltage values of the first capacitor and the second capacitor, the method further comprises:
when the end voltage value of the target capacitor is greater than or equal to a second voltage threshold, controlling the plurality of switching transistors to remain off, to stop charging the target capacitor, wherein the second voltage threshold is greater than or equal to the first voltage threshold.

9. The control method according to claim 7 or 8, wherein the balanced circuit comprises a control circuit and at least one balanced bridge arm, one balanced bridge arm comprises two switching transistors connected in series, the control circuit is connected to the inductor through the at least one balanced bridge arm, the collection circuit is connected to the control circuit, and after the detecting a direct current bus voltage, to obtain end voltage values of the first capacitor and the second capacitor, the method further comprises:
obtaining a half bus voltage value based on the direct current bus voltage; and
generating balanced modulation signals based on the end voltage value of the target capacitor and the half bus voltage value, and controlling on or off of the switching transistors in the at least one balanced bridge arm based on the balanced modulation signals, to adjust an output current of the inductor.

10. The control method according to claim 9, wherein after the obtaining a half bus voltage value based on the direct current bus voltage, the method further comprises:
obtaining an output current value of the series connection point between the first capacitor and the second capacitor and an input current value of the series connection point between the first capacitor and the second capacitor; and
generating a voltage regulation instruction based on the end voltage value of the target capacitor and the half bus voltage value; generating the balanced modulation signals based on the voltage regulation instruction, the output current value of the series connection point between the first capacitor and the second capacitor, and the input current value of the series connection point between the first capacitor and the second capacitor; and controlling on or off of the switching transistors in the at least one balanced bridge arm based on the balanced modulation signals, to adjust the output current of the inductor.

11. The control method according to any one of claims 7 to 10, wherein the balanced circuit further comprises the control circuit and the at least one balanced bridge arm, one balanced bridge arm comprises the two switching transistors connected in series, the control circuit is connected to the inductor through the at least one balanced bridge arm, the collection circuit is connected to the control circuit, and after the detecting a direct current bus voltage, to obtain end voltage values of the first capacitor and the second capacitor, the method further comprises:
obtaining the half bus voltage value based on the direct current bus voltage, and obtaining the output current value of the series connection point between the first capacitor and the second capacitor and the input current value of the series connection point between the first capacitor and the second capacitor; and
generating the balanced modulation signals based on the end voltage value of the target capacitor, the half bus voltage value, the output current value of the series connection point between the first capacitor and the second capacitor, and the input current value of the series connection point between the first capacitor and the second capacitor, and controlling on or off of the switching transistors in the at least one balanced bridge arm based on the balanced modulation signals, to adjust the output current of the inductor.
